Europäisches Patentamt

European Patent Office

Office européen des brevets

(19)

(11) Numéro de publication : **0 036 119**
**B1**

(12) **FASCICULE DE BREVET EUROPÉEN**

(45) Date de publication du fascicule du brevet :
25.07.84

(21) Numéro de dépôt : 81101474.5

(22) Date de dépôt : 02.03.81

(51) Int. Cl.³ : **G 08 G 1/12, G 01 C 21/14,**
**G 01 C 21/22**

(54) **Système de localisation d'un véhicule.**

(30) Priorité : 06.03.80 FR 8005027

(43) Date de publication de la demande :
23.09.81 Bulletin 81/38

(45) Mention de la délivrance du brevet :
25.07.84 Bulletin 84/30

(84) Etats contractants désignés :
AT BE CH DE FR GB IT LI LU NL SE

(56) Documents cités :
FR-A- 2 274 094
FR-A- 2 420 142
US-A- 3 789 198
US-A- 4 061 995

(73) Titulaire : **Bernard, Patrice**
**7, rue Fortuny**
**F-75017 Paris (FR)**

(72) Inventeur : **Bernard, Patrice**
**7, rue Fortuny**
**F-75017 Paris (FR)**

(74) Mandataire : **Weinmiller, Jürgen et al**
**Zeppelinstrasse 63**
**D-8000 München 80 (DE)**

## Description

L'invention concerne la localisation de véhicules automobiles.

L'art antérieur connaît des procédés de localisation, qui se rattachent à quatre familles.

La première famille fait appel à une infrastructure peu dense d'émetteurs ou de récepteurs radio. Selon le type de réalisation, un signal émis par le véhicule est reçu par plusieurs récepteurs fixes, ou bien plusieurs émetteurs fixes émettent des signaux reçus par le véhicule. La comparaison des signaux reçus permet, si l'on connaît la position des stations fixes, de calculer celle du véhicule. Dans certains cas, comme celui d'une localisation par satellite, les balises peuvent être mobiles mais avec une trajectoire connue.

La deuxième famille de procédés de localisation fait appel à une infrastructure, beaucoup plus dense, de balises susceptibles d'émettre ou de recevoir un signal. Que le signal soit émis par le véhicule ou par les balises fixes, le principe est d'émettre un signal dont la portée soit limitée. La position du véhicule se déduit de la connaissance des balises avec lesquelles le contact existe à un instant donné.

La troisième famille de procédés de localisation ne fait appel à aucune infrastructure mais à une intégration de déplacements élémentaires à partir d'une position initiale connue. Un exemple de procédé de ce type est la navigation par inertie utilisée sur des engins balistiques et certains aéronefs ou navires. Rien n'empêche théoriquement son application à des véhicules.

Une quatrième famille de procédés part d'une connaissance des positions autorisées pour le véhicule et lève le doute au moyen de renseignements physiques prélevés sur le véhicule, tels que le chemin parcouru. Dans cette famille, on connaît notamment le procédé consistant à déduire la position d'un autobus de la connaissance du trajet de la ligne et du chemin parcouru sur ce trajet. Avec d'autres procédés de cette famille, il est nécessaire d'avoir une estimation assez grossière de la position du véhicule et une connaissance exhaustive des artères élémentaires que le véhicule est susceptible d'emprunter. Parmi ces derniers procédés on peut citer ceux décrits dans le brevet français n° 2 274 094 et dans le brevet américain n° 3 789 198. Dans le procédé décrit dans le brevet français 2 274 094 la connaissance exhaustive des artères élémentaires que le véhicule est amené à emprunter se déduit d'un graphe dont les nœuds sont les carrefours et les branches les artères qui y aboutissent. Les branches sont décrites par la longueur des artères qu'elles représentent et par les nœuds qu'elles relient (mais non pas leur forme). Les nœuds sont décrits par les branches qui y aboutissent et par les angles qu'elles forment entre elles (mais non par leur position). Connaissant sa position initiale sur le graphe, un véhicule détecte l'approche d'un nœud par la distance parcourue sur une branche mesurée à l'aide d'un podomètre. Arrivé à un nœud il identifie la nouvelle branche empruntée par une mesure grossière de l'angle dont il tourne puis il utilise à nouveau son podomètre pour détecter l'approche du prochain nœud. Dans le procédé décrit dans le brevet américain n° 3 789 198 la connaissance exhaustive des artères élémentaires que le véhicule est susceptible d'emprunter se déduit d'un repérage des points d'un plan par des coordonnées mises en mémoire ; par exemple, un réseau quadrillé est placé sur un plan, chaque intersection du réseau quadrillé est assimilée à une position de la mémoire à laquelle la valeur 1 est donnée chaque fois que l'intersection considérée est située sur une voie carrossable. Le système de localisation comporte un système primaire d'estime estimant la position du véhicule d'après ses déplacements, la position estimée délivrée par ce système primaire étant corrigée pour coïncider avec la voie carrossable la plus proche si la mémoire précitée montre que la position estimée est en dehors d'une voie carrossable.

Les divers procédés connus présentent des inconvénients nombreux.

Les inconvénients de la première famille sont les suivants : elle nécessite une infrastructure, dont le coût élevé se justifie difficilement pour un petit nombre de véhicules. Elle utilise des canaux radio. Si ces canaux sont larges, ceci correspond à une consommation importante de la denrée rare que constitue le spectre radioélectrique. S'ils sont étroits, ceci conduit à une localisation imprécise. Si les signaux sont émis par les balises fixes et reçus par les véhicules, ceci oblige à doter ces derniers de moyens de mesure et de calcul non négligeables ; si en revanche les signaux sont émis par les véhicules et reçus par les balises fixes, l'encombrement des canaux impose une limite au nombre de véhicules dont le système permet d'assurer la localisation ou bien à la fréquence des localisations d'un même véhicule, spécialement si les canaux sont étroits.

Les inconvénients de la deuxième famille sont les suivants : elle suppose la mise en place d'une infrastructure très importante de balises, sans parler du réseau terrestre éventuellement nécessaire pour les relier. La précision de la localisation peut être assez variable, en raison notamment des conditions anormales de propagation que l'on peut rencontrer en zone urbaine, à moins que la portée des balises ne soit limitée par l'emploi de boucles noyées dans la chaussée, ce qui implique un investissement encore plus lourd, ou de transmissions radioélectriques, voire optiques, très directives ; dans ce cas, l'ombre d'autres véhicules peut entraîner l'interception des signaux.

Les inconvénients de la troisième famille sont les suivants : l'erreur faite sur la mesure des paramètres physiques a un effet généralement cumulatif, si bien que l'imprécision de la localisation croît très vite avec le temps ou avec le chemin parcouru, à moins, comme pour certains matériels militaires, de consentir à des coûts de réalisation très élevés ; même ainsi, la localisation devient vite trop imprécise pour être utile.

Les inconvénients de la quatrième famille sont les suivants : ou bien elle s'adresse à des véhicules dont l'autonomie est limitée, comme les autobus ; dans ce cas son intérêt se limite à certaines applications. Ou bien elle ne cherche pas à limiter les zones où le véhicule est autorisé à se trouver ; mais, dans ce cas, la description exhaustive de ces zones risque d'être un obstacle technique ou économique à la réalisation d'un système pratique.

Le but de l'invention est la réalisation d'un système de localisation de véhicules qui allie une grande précision à un coût faible, sans nécessiter d'infrastructure ni exiger de moyens radioélectriques et sans apporter de contraintes rigides aux déplacements des véhicules.

L'objet de l'invention est un système de localisation, constitué d'un système primaire et d'un système secondaire. Le système primaire entretient une position estimée à partir d'une position initiale connue et de l'intégration de déplacements élémentaires, déterminés à partir de mesures de la position de certains organes du véhicule. Le système secondaire recale le cas échéant la position estimée et, éventuellement, le cap estimé ainsi que d'autres paramètres intervenant dans le calcul de la position estimée comme, par exemple, la valeur du développement des pneumatiques. Le système secondaire se fonde sur la connaissance de zones où il n'est pas possible que le véhicule se trouve et donc telles que la position estimée ne peut se trouver à l'intérieur de l'une d'elles que par suite d'une erreur dans la détermination du point estimé. A la différence des procédés qui utilisent une connaissance des positions autorisées, le recours à une connaissance de zones interdites dans le seul but de recaler le système primaire permet de n'utiliser comme zones interdites qu'un sous-ensemble des zones où le véhicule ne peut se trouver et même d'en prendre une représentation stylisée, par exemple un cercle inscrit dans un pâté de maisons. La représentation de ces zones peut être graphique ou numérique.

L'invention sera mieux comprise à la lecture de la description d'une réalisation possible et des figures qui l'accompagnent. La description a pour seul but d'aider à la compréhension de l'invention et n'est nullement limitative. Les figures utilisées pour illustrer la description sont les suivantes :

la figure 1 est un schéma général du système de localisation selon l'invention et d'une disposition possible de ses organes constitutifs dans le véhicule sur lequel il est installé,

les figures 2 et 3 illustrent d'une manière schématique, selon deux plans orthogonaux, une réalisation possible d'un capteur et son installation sur un demi-essieu,

la figure 4 illustre une réalisation possible du descripteur de zones interdites,

les figures 5 et 6 illustrent selon deux plans orthogonaux une réalisation du pupitre de commande et de visualisation,

la figure 7 illustre un circuit donnant une valeur approchée de la position angulaire des roues à partir des indications des capteurs de roues,

la figure 8 illustre un circuit permettant d'accroître la précision de cette mesure,

la figure 9 illustre le schéma d'un système de gestion de courses à répartir depuis un poste central entre plusieurs véhicules reliés par liaison radio, mettant en œuvre un système de localisation selon l'invention.

Le système de localisation se compose d'un organe de calcul OC, de deux capteurs CG et CD permettant de connaître la position angulaire des roues arrière gauche et droite du véhicule, d'un descripteur de zones interdites DZI et se complète, pour la commodité du conducteur, d'un pupitre de commande et de visualisation PCV.

Chacun des deux capteurs CG et CD est constitué de la façon suivante. On a fixé, au demi-essieu DE reliant le différentiel à une roue, un disque portant des secteurs circulaires matérialisés par une couronne crénelée CC, l'ensemble d'un créneau et d'une dent adjacente constituant ce que nous appellerons le pas de la couronne. Deux barrières B1 et B2 sont constituées chacune d'une diode électroluminescente et d'un phototransistor. Elles sont disposées de façon que les dents de la couronne interceptent le faisceau mais que les créneaux le laissent passer. Elles sont décalées angulairement entre elles d'un angle correspondant à $(n + 1/2)$ fois le demi-pas.

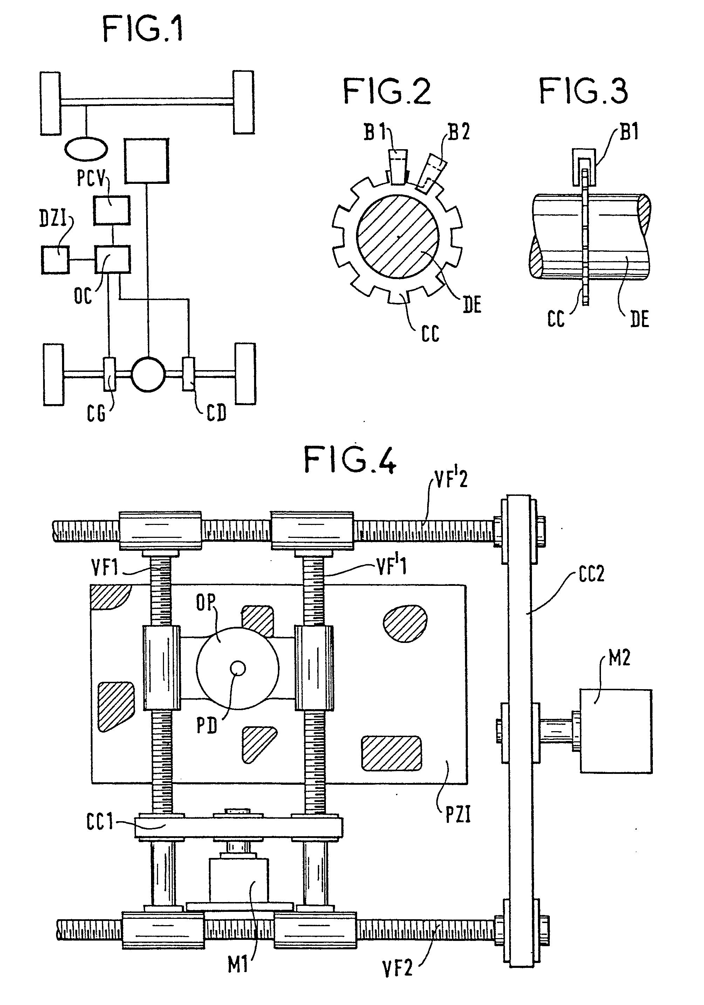

Le descripteur de zones interdites DZI (figure 4) comporte un film plan transparent PZI ayant des parties opaques correspondant à une représentation graphique non exhaustive et stylisée des zones interdites et un dispositif de lecture ponctuelle porté par un équipage mobile qui se déplace par rapport à ce plan. L'équipage mobile est constitué, d'un côté du film, par une source lumineuse ponctuelle, par exemple une diode électroluminescente, dont une optique OP focalise l'image sur un point du film plan transparent PZI et, de l'autre côté du film, par un photodétecteur non représenté. L'équipage mobile se compose de deux plateaux mobiles à déplacements orthogonaux. Le premier plateau porte le dispositif de lecture ponctuelle et se déplace dans une direction sur deux vis sans fin VF1 et VF'1 actionnées par une courroie crantée CC1 entraînée par un moteur pas à pas M1. Le deuxième plateau porte le premier plateau ainsi que ses moyens d'entraînement et se déplace dans une direction orthogonale sur deux vis sans fin VF2 et VF'2 actionnées par une courroie crantée CC2 entraînée par un moteur pas à pas M2.

La commande des moteurs pas à pas M1 et M2 permet d'amener le dispositif de lecture ponctuelle au-dessus du point du plan correspondant à la position estimée du véhicule. Le dispositif de lecture ponctuelle, en détectant si le point du plan considéré est opaque ou transparent, indique si la position estimée est ou non dans une zone interdite.

Les parties opaques du plan PZI correspondent à une représentation non exhaustive et stylisée des zones interdites. C'est-à-dire qu'elles ne correspondent pas à toutes les zones où le véhicule ne peut pas se trouver, mais seulement à certaines d'entre elles qui, en outre, ne sont pas représentées avec leurs contours exacts mais avec un contour simplifié. Les parties opaques peuvent correspondre, par exemple, à des figures inscrites dans certains pâtés de maisons d'une ville.

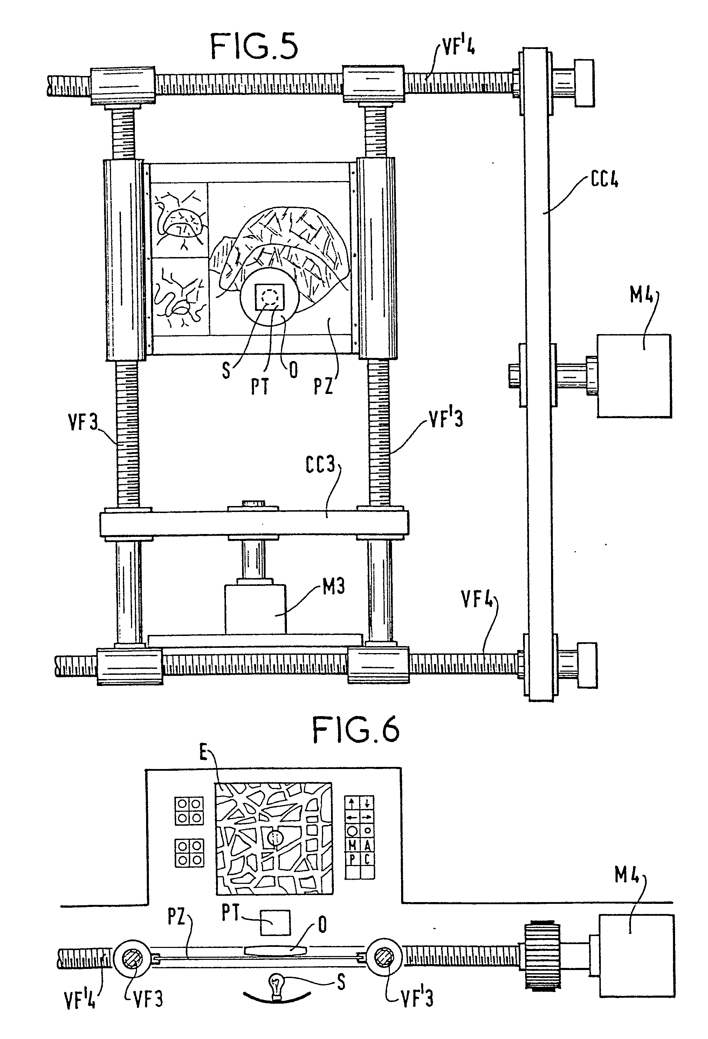

Le pupitre de commande et de visualisation PCV est constitué des organes suivants (figure 5) : une source lumineuse S projette à travers une optique O et, facultativement, à travers un prisme tournant PT, l'image d'une fraction d'un plan de zone PZ sur un miroir, non représenté, qui le renvoie sur un écran E faisant face au conducteur du véhicule. A côté de cet écran, un certain nombre de boutons et de voyants autorisent un échange de commandes et d'informations avec le système de localisation.

Le plan de zone PZ se déplace devant l'optique sous l'action de commandes envoyées à deux moteurs pas à pas M3 et M4 qui, par l'intermédiaire de courroies crantées CC3 et CC4, actionnent des vis sans fin VF3, VF'3 et VF4, VF'4 et assurent ainsi le déplacement du support auquel est assujetti PZ. Le plan de zone peut contenir plusieurs représentations de la même zone, à des échelles et avec des degrés de détail différents ; des boutons de commande (O, o) permettent de passer d'une échelle à une autre, le plan de zone se déplaçant pour que l'image reste centrée sur le même point géographique.

Le prisme tournant PT, dont la présence est facultative, permet d'orienter la représentation en sorte que le cap du véhicule corresponde à l'axe de l'écran ; ou bien, en l'absence de prisme tournant PT ou si une commande le désarme, la représentation peut être orientée vers le Nord.

Le pupitre de commande et de visualisation peut être équipé d'un ensemble d'affichage de direction, non représenté sur la figure. Cet ensemble consiste en un certain nombre de diodes électroluminescentes dont une optique et, éventuellement, un miroir superposent l'image sur l'écran. Cet ensemble permet d'afficher le cap du véhicule et, dans le cas où l'on ajoute à l'organe de calcul du système de localisation un programme de recherches de chemin critique, il permet également d'afficher l'itinéraire à emprunter ou, si l'échelle est trop dilatée, le début seulement de cet itinéraire.

On va maintenant donner une description plus détaillée du fonctionnement du système de localisation.

L'ensemble des barrières B1 et B2 associé à une couronne crénelée CC (figures 2 et 3) permet une connaissance de la position angulaire de la roue, approchée à un huitième du pas des dents.

En effet, lorsque la couronne crénelée CC tourne d'un angle égal au pas, les barrières photoélectriques B1 et B2 passent chacune par deux transitions entre ombre et lumière, pour des positions différentes de la couronne crénelée CC puisqu'elles (B1 et B2) sont espacées d'un nombre impair de quarts de pas. L'éclairement ou le non-éclairement des photodétecteurs des barrières photoélectriques B1 et B2 permet donc de définir quatre états par lesquels passe l'ensemble des sorties des barrières photoélectriques B1 et B2 pour un déplacement angulaire de la couronne crénelée CC égal à un pas. L'ordre dans lequel on passe par ces quatre états permet de connaître le sens de la rotation. Chacun des états correspondant à un angle d'un quart de pas, le système donne une connaissance de la position angulaire de la couronne crénelée CC approchée au un huitième de pas. Ainsi, sur une couronne comportant soixante-quatre dents, la position est connue à 1/512 de tour près.

La connaissance de la circonférence des pneumatiques permet d'associer une distance parcourue à chaque déplacement angulaire d'un quart de pas. La totalisation par l'organe de calcul OC de ces distances élémentaires permet de connaître la distance parcourue par la roue gauche, par la roue droite et, si on le désire, par le différentiel.

La mesure de la différence des déplacements angulaires des roues gauche et droite, connue avec une erreur inférieure à un quart de pas, donne une connaissance approchée du cap du véhicule. La variation du cap se déduit en effet d'une variation de la position angulaire relative des roues gauche et droite en multipliant cette variation par le rapport entre le rayon des pneumatiques et la voie des roues arrière.

Une base de temps permet une connaissance plus précise de la position angulaire relative des roues — et donc du cap — lorsque le véhicule se déplace à une vitesse qui n'est pas trop faible. On va comprendre ceci par un exemple. Supposons que l'on parte d'un cap initial pour lequel le photodétecteur de la barrière B1 de la roue gauche et celui de la barrière B1 de la roue droite passent en même temps de l'ombre à la lumière et de la lumière à l'ombre. Supposons maintenant que le véhicule vienne très légèrement sur sa droite puis stabilise sa route au nouveau cap.

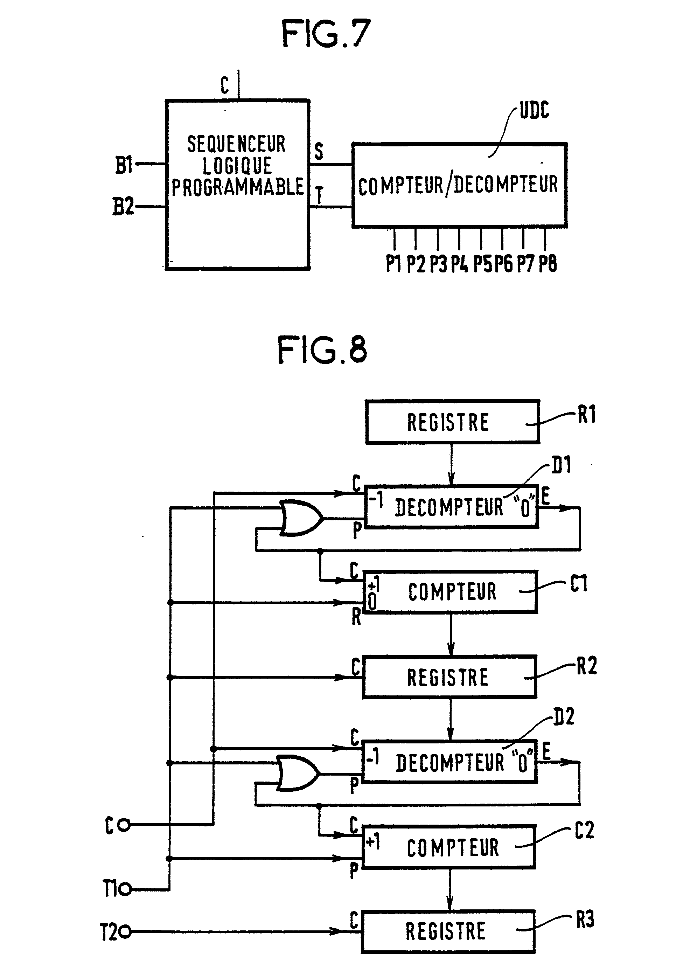

Pendant le tournant, la roue gauche aura tourné légèrement plus vite que la roue droite avant de stabiliser son avance. Le photodétecteur de la barrière B1 de la roue gauche aura ses transitions avec un peu d'avance sur celles de son homologue de la roue droite. Le rapport entre la durée pendant laquelle l'un des photodétecteurs est éclairé et pas l'autre à la période d'un pas, c'est-à-dire de l'alternance d'une période d'éclairement et d'une période d'ombre, indique la fraction de pas dont la roue gauche a pris l'avance. Les figures 7 et 8 donnent un exemple de réalisation.

La figure 7 illustre un circuit permettant de connaître la position angulaire à un huitième de pas près. Sur cette figure, FPLS est un séquenceur logique programmable, tel que le Signetics 82 S 105. Il accepte comme transitions en entrée les signaux sortant des barrières B1 et B2. Il connaît huit états internes, correspondant à quatre quarts de tour, chaque quart de tout étant décomposé en un état transitoire ne durant qu'une période de l'horloge appliquée au séquenceur, et un état stable, durant jusqu'à la prochaine transition de B1 ou de B2. S et T sont deux sorties. S correspond au sens de la rotation et T à un top ayant la durée de l'état transitoire. Les sorties S et T alimentent un compteur-décompteur UDC dont les sorties expriment en quarts de pas la position angulaire.

La figure 8 illustre un circuit permettant d'approcher la valeur de la fraction de pas dont une roue est décalée par rapport à l'autre, à partir d'impulsions T2 et T1 engendrées lors des transitions détectées par deux barrières dont l'une est liée à la deuxième roue et l'autre à la première.

Sur cette figure, D1 représente un décompteur initialisé, par l'apparition d'une impulsion T1, à une valeur contenue dans un registre R1. Ce décompteur est réinitialisé à chaque fois que son compte est nul, en sorte que l'ensemble du registre R1 et du décompteur D1 constitue un diviseur, par la valeur contenue dans le registre R1, d'une série d'impulsions arrivant sur une entrée C et provenant d'une horloge. La fréquence divisée, disponible en E, alimente un compteur C1, remis à zéro par une impulsion T1 qui provoque également le verrouillage dans un registre R2 de la valeur atteinte par le compteur C1 avant remise à zéro. Un autre décompteur D2 et un compteur C2 constituent avec le registre R2 un ensemble semblable à l'ensemble R1, D1, C1. Le compteur C2 s'incrémente au rythme des impulsions C divisé par la valeur contenue dans le registre R2. Le compte atteint par le compteur C2 est verrouillé dans un registre R3·par l'apparition d'une impulsion T2.

Le compte verrouillé dans le registre R3 donne le rapport entre le temps s'écoulant entre deux transitions sur deux roues différentes et celui s'écoulant entre deux transitions sur la même roue. Le premier temps définit en effet l'intervalle de comptage, tandis que la fréquence de comptage est inversement proportionnelle au deuxième. L'échelle est telle que, si ces deux temps sont égaux, la mesure contenue dans R3 est (à un près) égale à la valeur contenue dans le registre R1. Par commodité, cette valeur peut être une puissance de deux, mais elle peut être ajustée pour compenser des inégalités dans la taille des dents.

L'organe de calcul OC dispose donc, grâce au circuit représenté figure 7, éventuellement complété pour accroître la précision par celui représenté dans la figure 8, des moyens de connaître le chemin parcouru et le cap. Il acquiert cette connaissance par scrutation du compteur décompteur UDC et du registre R3 ou par une lecture provoquée par une interruption liée au compteur décompteur UDC, par exemple tous les tours de roue.

Si l'organe de calcul OC connaît la position et le cap initiaux, un programme d'intégration lui permet de déterminer le point estimé et de déplacer comme il convient l'équipage mobile du détecteur de zones interdites DZI.

Il est possible que le photodétecteur PD de cet équipage vienne à détecter une zone interdite. Ceci peut résulter de l'imprécision des mesures ou des calculs, ou encore d'un dérapage du véhicule, ou bien d'une inclinaison du revêtement de la chaussée, ou encore d'une valeur incorrecte d'un des paramètres décrivant le véhicule, comme le développement d'un pneumatique.

Dans ce cas intervient un programme de correction. La position estimée est déplacée perpendiculairement au cap, d'une valeur égale à la longueur élémentaire utilisée dans le calcul d'estime, typiquement un tour de roue. Le sens de la correction se déduit du sens du déplacement qu'il faut imprimer au photodétecteur PD pour le faire sortir de la zone interdite (parce que les moteurs utilisés sont de type pas à pas, ledit déplacement de PD peut n'être qu'une approximation d'un déplacement perpendiculaire au cap).

La correction de position qui vient d'être décrite n'est pas la seule à laquelle se livre l'organe de calcul. Il corrige également le cap estimé, d'une valeur très faible, dans le même sens, gauche ou droit, que la correction de position. De plus, il tient un cumul des corrections de cap apportées sur une certaine distance. Si ce cumul dépasse une certaine valeur, ceci peut être le signe d'une mauvaise connaissance du gonflement relatif des pneus gauche et droit. En conséquence, l'organe de calcul incrémente ou décrémente, selon le cas, la valeur d'une constante, très petite, qu'il ajoute au cap obtenu par l'estime pour chaque tour de roue.

Enfin, bien que la correction précédente puisse compenser une différence de gonflage, il peut arriver que la trajectoire estimée rencontre une zone interdite parce que le développement utilisé pour les deux roues est soit trop petit soit trop grand, par suite d'une modification de pression. Par exemple, une telle situation pourra se produire juste après un tournant suivant une longue ligne droite. L'organe de calcul introduit encore une correction sur le développement des roues. A cet effet, il note la position estimée, par exemple tous les kilomètres. Lors d'une correction primaire, il calcule le produit scalaire de cette correction par la direction moyenne récente. Si la somme de ces produits scalaires pour une distance parcourue donnée, 10 Km par exemple, atteint une valeur notable, 10 m par exemple, l'organe de calcule apporte une petite correction à la valeur qu'il utilise pour le développement des pneumatiques.

Dans une variante du descripteur de zones interdites DZI, celles-ci sont représentées en mémoire, par exemple sous la forme de cercles inscrits dans des pâtés de maison et décrits par leur rayon et les coordonnées de leur centre. Dans ce cas, la détermination du sens dans lequel apporter la correction de position s'appuie sur l'angle entre le cap et le vecteur allant de la position vers le centre. Elle se fait perpendiculairement au cap et vers l'extérieur du cercle.

Le système de navigation à l'estime, consistant en une intégration des données saisies à partir des roues, corrigé comme il vient d'être dit à partir des détections de zones interdites, fournit la position du véhicule.

La connaissance de la position du véhicule avec la précision fournie par le système selon l'invention (de l'ordre de quelques mètres) rend possible de nombreuses applications, notamment l'indication d'un itinéraire recommandé pour se rendre en un point choisi. A cette fin, le pupitre de commande et de visualisation PCV comporte des boutons pour commander le déplacement, relatif au plan de la zone, du marqueur servant normalement à représenter la position du véhicule. Il comporte également un bouton pour désigner l'emplacement du marqueur sur le plan comme étant celui du point de destination. Pour rendre cette opération de désignation plus rapide et plus facile, la zone où se déplace le véhicule peut être représentée sur le plan de zone PZ plusieurs fois et à des échelles et avec des degrés de détail différents, comme on le voit sur la figure 5. Des boutons supplémentaires (O, o) du pupitre de commande et de visualisation PCV permettent de passer à une échelle plus grande ou plus petite, l'organe de calcul OC faisant en sorte que, quelle que soit l'échelle, le marqueur désigne le même endroit géographique, ou bien refusant de changer l'échelle si cet endroit ne figure pas sur le plan à la nouvelle échelle.

Le pupitre de commande et de visualisation PCV se complète également de moyens, non représentés sur la figure 5, permettant de visualiser l'itinéraire recommandé. Ces moyens consistent en un ensemble de diodes électroluminescentes, en une optique superposant sur l'écran E l'image de celles des diodes électroluminescentes qui sont allumées et en un dispositif permettant d'allumer sélectivement certaines des diodes électroluminescentes pour que l'image projetée corresponde à l'itinéraire choisi.

L'organe de calcul OC est complété par une mémoire numérique contenant les coordonnées des nœuds d'un graphe orienté représentant un certain nombre de points de la zone dans laquelle le véhicule se déplace et des valeurs de pondération associées aux branches donnant une estimation du temps nécessaire pour les parcourir. Pour choisir l'itinéraire recommandé, l'organe de calcul OC utilise un algorithme de recherche du chemin le plus court qui consiste à estimer le temps nécessaire pour aller de l'emplacement du véhicule aux nœuds qui l'entourent immédiatement, comme s'il existait des artères directes pour ce faire, à procéder de même pour des artères fictives aboutissant au point où l'on désire se rendre à partir des nœuds qui l'entourent immédiatement et à appliquer, au graphe des artères de la zone ainsi complété par quelques artères fictives, un algorithme de recherche de chemin critique classique en recherche opérationnelle comme celui de Dantzig ou de Ford-Fulkerson.

On peut disposer dans la mémoire numérique de plusieurs jeux de valeurs de pondération pour une même branche, correspondant par exemple à des conditions de circulation différentes, et choisir une valeur ou une autre en fonction de l'état de la circulation. La mémoire peut être une mémoire vive afin de permettre la mise à jour des valeurs de pondération par exemple à partir de messages reçus par un récepteur radio placé à bord du véhicule et diffusés par une station fixe.

Cette station fixe pourrait évaluer les valeurs par tout moyen approprié comme de classiques comptages de véhicules. Elle pourrait aussi, et avec avantage, calculer ces valeurs à partir de messages provenant d'autres véhicules équipés du système de localisation de l'invention et d'un émetteur radio.

En effet, de tels véhicules sont à même d'identifier les nœuds du graphe à proximité immédiate desquels ils passent, de noter l'instant où ils en sont le plus près et de déterminer si aux deux derniers nœuds près desquels ils sont passés correspond une artère du graphe et, dans ce dernier cas, de calculer le temps qu'ils ont mis à la parcourir. Ils sont donc en mesure de faire connaître l'artère et le temps à la station fixe, soit à leur propre initiative, soit en réponse à une interrogation. Cette interrogation peut être de la forme : que tous les véhicules situés à moins d'un kilomètre du point dont voici les coordonnées fassent connaître, dans l'ordre de leur éloignement de ce point, la dernière artère qu'ils ont parcourue et le temps mis à la parcourir. L'interrogation peut aussi se restreindre en ne demandant de réponse qu'aux seuls véhicules pour lesquels le temps ainsi mesuré s'écartait, par exemple, de plus de 30 % du temps précédemment diffusé par la station.

Une autre application intéressante du système de localisation selon l'invention concerne la reconstitution du chemin parcouru. Elle suppose l'adjonction à l'organe de calcul OC d'une mémoire dans laquelle celui-ci puisse inscrire un certain nombre de points de passage et, le cas échéant, les instants correspondants. Par exemple, pour tout hectomètre parcouru, on pourrait enregistrer la position du véhicule et l'heure. Ou encore, on pourrait enregistrer, avec plus de détails, l'historique des mille derniers mètres parcourus. Les informations ainsi accumulées pourraient être restituées soit par radio, en réponse à une interrogation appropriée, soit par une trace écrite, soit sur un support transportable, comme une cassette magnétique, soit encore par lecture directe sur le véhicule, une fois celui-ci arrêté.

Une autre application intéressante du système de localisation selon l'invention, due à sa très grande précision, concerne la location de voitures sans chauffeur, abandonnées par leur dernier utilisateur où bon leur semble. Le système de localisation, complété d'un émetteur récepteur de radio, permet de localiser le véhicule libre le plus proche de l'endroit demandé. Une table donnant les coordonnées correspondant à certains numéros des rues et un programme d'interpolation permettent de traduire cette position et d'indiquer à l'utilisateur quasiment devant quel numéro de quelle rue est stationné le véhicule, en plus des renseignements de marque, type, couleur et numéro d'immatriculation permettant de l'identifier. Pour que le système convienne à la location de véhicules, il faut encore que le demandeur, s'il est habilité, et lui seul, puisse utiliser le véhicule qui lui a été affecté.

Il faut pour cela associer au système de localisation de l'invention, complété d'un émetteur-récepteur, un dispositif d'identificaion et d'authentification, qui peut être à lecteur de badge et/ou à clavier. L'organe de calcul est alors en mesure de vérifier que l'usager qui se présente est bien celui qui lui a été annoncé par un message radio.

Le système qui vient d'être décrit peut avantageusement être complété par le système de reconstitution du chemin parcouru décrit précédemment, qui donne à l'organisme de location de voitures la possibilité de calculer le prix à facturer à l'utilisateur, voire de le débiter directement si le support présenté au dispositif d'identification et d'authentification est du type carte de paiement et si ce dispositif est capable de débiter la carte.

Une autre application particulièrement intéressante du système de localisation selon l'invention est la gestion de courses à répartir depuis une station centrale entre plusieurs véhicules reliés par radio.

La station centrale pose par voie radio une question à l'ensemble des véhicules, qui répondent en fonction de leurs positions respectives. On peut penser, par exemple à la recherche du véhicule le mieux placé pour se rendre à un endroit donné. Il est particulièrement intéressant, dans ce cas, de limiter l'encombrement du canal radio, par exemple en faisant en sorte que les réponses soient fournies par ordre d'intérêt décroissant, en limitant le nombre et en maximisant l'efficacité de l'emploi du canal radio.

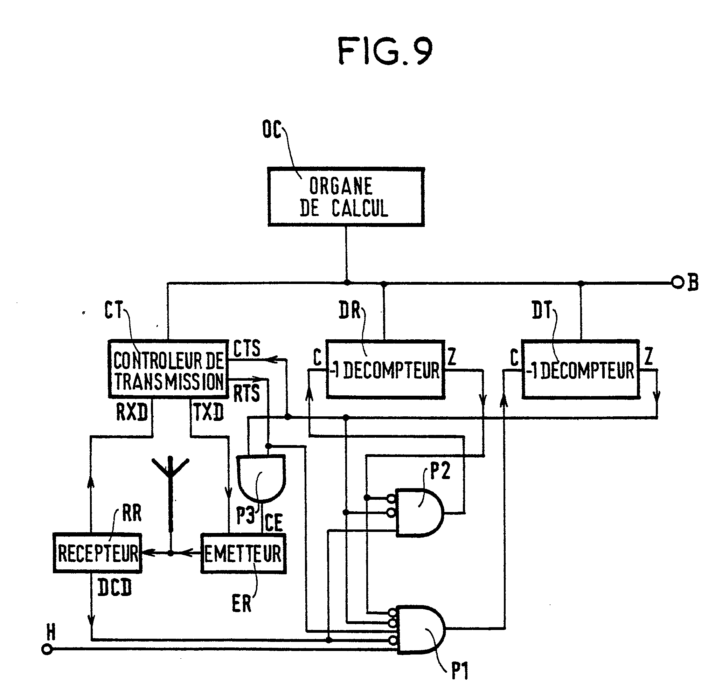

Tous ces objectifs sont atteints par un complément utile de l'invention, qu'illustre la figure 9.

Sur cette figure, OC est l'organe de calcul. Il est relié par un bus B à un contrôleur de transmission de données CT, à un décompteur de réponses DR qu'il peut initialiser et à un décompteur de temps DT qu'il peut également initialiser. L'émetteur radio ER reçoit les données à émettre TXD du contrôleur de transmission de données CT et la commande d'émission sur une entrée CE. Le récepteur radio RR fournit les données reçues au contrôleur de transmission de données CT sur sa sortie RXD et fournit une indication de détection de porteuse sur sa sortie DCD. Trois portes P1, P2 et P3 complètent le dispositif.

Le fonctionnement de l'ensemble est le suivant. Lorsqu'il souhaite répondre, l'organe de calcul OC initialise le contrôleur de transmission CT, charge le décompteur de réponse DR avec le nombre maximum de réponses autorisées par la station et le décompteur de temps DT avec une valeur qu'il a calculée et qui est d'autant plus faible qu'il estime grand l'intérêt de sa réponse. A titre d'exemple, cette valeur peut être proportionnelle au carré de la distance du véhicule au point à atteindre, le facteur de proportionnalité étant fonction d'autres conditions comme le type de la question.

Après ces initialisations, le décompteur DT est décrémenté au rythme d'une horloge H, en défalquant les périodes pendant lesquelles le récepteur RR indique par le signal DCD que la station n'a pas libéré la fréquence ou bien qu'un autre véhicule est en train de répondre, aussi longtemps que le contrôleur de transmission CT indique par le signal RTS son désir d'émettre, et dans la mesure où ni le décompteur de temps DT ni le décompteur de réponses DR ne sont revenus à zéro. Si, dans ces conditions, le décompteur de temps DT parvient à zéro, il déclenche l'émission de l'émetteur radio ER par un signal envoyé à la porte CTS du contrôleur de transmission CT et, par une porte P3 contrôlée par le signal RTS, à la porte CE.

Chaque réponse d'un autre véhicule reçue par le récepteur radio RR donne lieu à une décrémentation du décompteur de réponses DR, pour autant que ni le décompteur de temps DT ni le décompteur de réponses DR ne soient revenus à zéro.

Avec le fonctionnement qui vient d'être décrit, on voit que tous les véhicules susceptibles de répondre à une même question commencent leur décompte en même temps, surtout si la station maintient sa porteuse de façon que ce soit sa retombée qui synchronise le début du fonctionnement. Le véhicule qui estime avoir la meilleure réponse, c'est-à-dire celui qui a initialisé le décompteur de temps DT avec la valeur la plus faible, sera le premier à répondre. L'émission de son message inhibera l'émission d'autres véhicules, à moins que les deux émissions commencent presque en même temps. Dans ce cas, il est vraisemblable que les émissions se perturberont et que la station ne pourra pas traiter le message reçu. C'est alors le message émis par le véhicule classé en troisième position par le facteur de mérite, perçu par les autres véhicules comme étant la deuxième réponse, qui sera considéré par la station comme étant la meilleure réponse. Si la densité géographique des véhicules qui répondent est uniforme et si la valeur mise dans le décompteur de temps DT est proportionnelle au carré de leur distance au point à atteindre, la probabilité de collision d'un message et d'un autre ne dépend que de la densité et du facteur de proportionnalité utilisé auquel elle est inversement proportionnelle.

Il n'est peut être pas inutile de remarquer que le bon fonctionnement du système ne suppose pas que les débits binaires des messages émis par la station et par les véhicules soient identiques, non plus que leurs procédés de modulation.

La description qui vient d'être donnée d'une réalisation possible du système de localisation de véhicules de l'invention ainsi que des organes qui peuvent lui être adjoints pour rendre possibles les quelques applications citées n'a qu'une valeur illustrative. Elle ne retire rien à la généralité de l'invention, qui reste valable si d'autres moyens équivalents ou d'autres méthodes sont substitués à ceux qui ont été décrits.

**Revendications**

1. Système de localisation d'un véhicule comportant un système primaire donnant une estimation de la position du véhicule à partir d'une position et d'un cap initiaux et des déplacements effectués par le véhicule depuis cette position initiale et déduits des mouvements de certains organes du véhicule, et un système secondaire corrigeant l'estimation de la position du véhicule fournie par le système primaire par comparaison de cette position estimée avec une description du lieu des déplacements du véhicule, caractérisé en ce que le système secondaire corrige l'estimation de la position du véhicule fournie par le système primaire grâce à la comparaison de la position estimée par rapport à des zones de formes arbitraires, dites zones interdites, figurant parmi les surfaces imparcourables par le véhicule et ne constituant qu'un sous-ensemble en forme et en nombre de ces dernières.

2. Système de localisation de véhicule selon la revendication 1, caractérisé en ce que le système primaire déduit le cap du véhicule de la différence entre les mouvements de rotation d'une roue droite et d'une roue gauche.

3. Système de localisation d'un véhicule selon la revendication 2, ayant un système primaire comportant deux disques qui portent des secteurs circulaires (CC) et qui sont liés en rotation, l'un avec une roue droite, l'autre avec une roue gauche du véhicule, et deux capteurs (CG, CD) solidaires du châssis du véhicule, chacun associé à un disque et sensible au défilement des secteurs portés par le disque, caractérisé en ce que ledit système primaire déduit le cap du véhicule de la différence entre le nombre de secteurs (CC) du disque lié à la roue droite et le nombre de secteurs du disque lié à la roue gauche ayant défilé devant les capteurs (CG, CD) et affine cette déduction par la prise en compte du rapport entre la durée du délai séparant deux détections successives de changement de secteurs (CC) par les deux capteurs (CG, CD) et la durée séparant deux détections successives de changement de secteurs (CC) par un seul capteur.

4. Système de localisation d'un véhicule selon la revendication 1, caractérisé en ce que le système secondaire comporte :
— un plan (PZi) avec une représentation graphique, non exhaustive et stylisée des zones interdites,
— un dispositif de repérage capable de situer la position estimée du véhicule par rapport audit plan,
— un équipage mobile (OP) se déplaçant relativement à la surface dudit plan (PZi),
— et un lecteur ponctuel (PD) porté par l'équipage mobile amené à la position estimée du véhicule par le dispositif de repérage et capable de détecter si cette position estimée se situe ou non dans une zone interdite dudit plan (PZi).

5. Système de localisation d'un véhicule selon la revendication 1, caractérisé en ce que le système secondaire comporte : une mémoire numérique dans laquelle sont stockées des coordonnées et des informations définissant la position et la forme des zones interdites, et un organe de calcul (OC) déterminant si la position estimée du véhicule se trouve ou non à l'intérieur de l'une des zones interdites repérées en mémoire.

6. Système de localisation d'un véhicule selon la revendication 1, caractérisé en ce que le système secondaire corrige non seulement la position estimée du véhicule délivrée par le système primaire mais aussi les valeurs intermédiaires des déplacements utilisés par le système primaire pour l'obtention de la position estimée ainsi que les paramètres caractéristiques du véhicule servant au système primaire pour l'estimation des déplacements.

7. Système de localisation d'un véhicule selon la revendication 1, caractérisé par le fait qu'il comporte en outre :
— une mémoire numérique contenant les coordonnées des nœuds d'un graphe orienté représentant un certain nombre de points de la zone dans lequel le véhicule se déplace, et des valeurs de pondération associées aux branches donnant une estimation du temps nécessaire pour les parcourir,
— un organe de calcul (OC) permettant de calculer le chemin le plus rapide entre la position estimée du véhicule délivrée par le système primaire et recalée par le système secondaire, et une position choisie comme destination,
— un moyen (PCV) permettant d'introduire dans l'organe de calcul (OC) les coordonnées du point de destination
— et un organe d'affichage (E) commandé par l'organe de calcul (OC) et permettant de visualiser la direction à suivre à court terme.

8. Système de localisation d'un véhicule selon la revendication 7, caractérisé en ce que l'organe d'affichage (E) permet de visualiser sur une portion de plan la position estimée du véhicule et le trajet recommandé.

9. Système de localisation d'un véhicule selon la revendication 1, caractérisé en ce qu'il comporte en outre une mémoire dans laquelle sont accumulées des indications sur le trajet parcouru telles que la position estimée du véhicule et l'heure tous les hectomètres parcourus.

10. Système de localisation d'un véhicule selon la revendication 1, caractérisé en ce qu'il comporte en outre un répondeur radioélectrique qui, sous l'action d'un dispositif d'interrogation, émet la position estimée du véhicule.

11. Système de gestion de courses à répartir depuis un poste central entre plusieurs véhicules reliés par liaison radio au poste central et munis chacun d'un système de localisation comportant un système primaire donnant une estimation de la position du véhicule à partir d'une position initiale et des déplacements effectués par le véhicule depuis cette position initiale et déduits des mouvements de certains organes du véhicule, et un système secondaire corrigeant l'estimation de la position du véhicule fournie par le système primaire, grâce à la comparaison de la position estimée à celles de certaines zones interdites où il est impossible que le véhicule se trouve, ledit système de gestion comportant un dispositif d'interrogation installé au poste central et permettant de faire connaître à chaque véhicule, une proposition de course, et, embarqués à bord de chaque véhicule, un répondeur de prise en charge et un système de traitement attribuant un facteur de mérite à chaque course proposée en fonction de la position estimée du véhicule délivrée par le système de localisation, ledit système de gestion étant caractérisé par le fait qu'il comporte en outre des moyens (DT) pour ne permettre le fonctionnement du répondeur d'un véhicule, en réponse à un appel du circuit d'interrogation, qu'après un délai dont la durée est fonction du facteur de mérite attribué par le système de traitement du véhicule considéré à la course proposée.

12. Système de gestion de courses selon la revendication 11, caractérisé en ce qu'il comporte en outre, embarqué à bord de chaque véhicule, un dispositif (P1) pour neutraliser le décompte dudit délai lorsqu'un répondeur d'un autre véhicule fonctionne.

13. Système de gestion de courses selon la revendication 12, caractérisé en ce qu'il comporte en outre, embarqué à bord de chaque véhicule, un décompteur (DR) qui bloque le répondeur du véhicule considéré s'il n'a pas répondu avant un nombre déterminé d'autres répondeurs.

**Claims**

1. A vehicle location monitoring system comprising a primary system for providing an estimated vehicle position from an initial position and course and as a function of the subsequent vehicle displacements which are derived from the movement of certain vehicle components, and a secondary system for correcting the estimated position as given by the primary system by comparing this estimated position with a description of the places passed by the vehicle, characterized in that the secondary system corrects the estimated vehicle position furnished by the primary system by comparing the estimated position with zones of arbitrary shape, called forbidden zones, which belong to the areas where the vehicle cannot pass and which constitute a subassembly of these areas as far as the shape and the number of said zones are concerned.

2. A vehicle location monitoring system according to claim 1, characterized in that the primary system derives the vehicle course from the difference in the rotational movement between a right wheel and a left wheel.

3. A vehicle location monitoring system according to claim 2, wherein said primary system comprises two disks bearing circular sectors (CC) and being linked to the rotation of a right and a left wheel respectively, and two sensors (CG, CD) fixed to the vehicle chassis, each sensor being associated to a disk and being responsive to the passing of the sectors on said disk, characterized in that said primary system derives the course of the vehicle from the difference between the number of sectors which have rotated past the sensors (CG, CD) associated respectively to a right and to a left wheel, and corrects this difference by taking into account the ratio between the time elapsing between two successive detections of new sectors (CC) by the two sensors (CG, CD) and the time elapsing between two successive detections of new sectors (CC) by only one sensor.

4. A vehicle location monitoring system according to claim 1, characterized in that the secondary system comprises :
— a map (PZi) with a graphical non-exhaustive and stylized representation of the forbidden zones,
— a referencing device which is able to mark the estimated position of the vehicle on that map,
— an assembly (OP) that can be moved on the surface of said map (PZi),
— and a spot read-out device (PD) carried by the movable assembly and brought into the estimated vehicle position by the referencing device and capable of detecting whether this estimated position lies within one of said forbidden zones of said map (PZi) or not.

5. A vehicle location monitoring system according to claim 1, characterized in that the secondary system comprises : a digital memory in which coordinates and informations are stored defining the position and the shape of the forbidden zones, and a computing device (OC) which determines whether the estimated vehicle position lies within one of the stored forbidden zones or not.

6. A vehicle location monitoring system according to claim 1, characterized in that the secondary system corrects not only the estimated vehicle position which is delivered by the primary system, but also the intermediate vehicle movement values used by the primary system for obtaining the estimated position, as well as the characteristic parameters of the vehicle which are used by the primary system to estimate the movements.

7. A vehicle location monitoring system according to claim 1, characterized in that it further comprises :
— a digital memory containing the coordinates of the nodes of a directed graph representing a certain number of points of the zones in which the vehicle travels, together with weight values associated to the branches and giving an estimation of the time necessary to travel therethrough,

— a computing device (OC) which is able to compute the shortest path between the estimated vehicle position delivered by the primary system and adjusted by the secondary system, and a position selected as destination,

— a means (PCV) for entering the coordinates of the destination point into the computing device (OC),

— and a display device (E) controlled by the computing device (OC) and conceived to visualize the short term direction to be followed.

8. A vehicle location monitoring system according to claim 7, characterized in that the display device (E) is conceived to visualize the estimated vehicle position and the suggested route on a portion of the map.

9. A vehicle location monitoring system according to claim 1, characterized in that it further comprises a memory in which indications relating to the travelled path such as the estimated vehicle position and the time of the day are accumulated for every hundred meters.

10. A vehicle location monitoring system according to claim 1, characterized in that it further comprises a radio electric transceiver which sends out the estimated vehicle position when invited by an interrogating device.

11. A course dispatching system which enables a central station to dispatch courses between several vehicles connected by a radio link to the central station and each equipped with a location monitoring system comprising a primary system for providing an estimated vehicle position from an initial position and as a function of the subsequent vehicle displacements, these displacements being derived from the movements of certain vehicle components, and comprising a secondary system for correcting the estimated vehicle position furnished by the primary system, by comparing the estimated position with the positions of certain forbidden zones in which a vehicle never can travel, said dispatching system comprising an interrogation device in the central station which device offers a route proposal to each vehicle, and on board of each vehicle a transceiver to reply to the route proposal, and a processing system which attributes a factor of merit to each proposed route as a function of the estimated vehicle position delivered by the localisation system, characterized in that the dispatching system further comprises means (DT) for causing the transceiver of a vehicle to reply to a call coming from the interrogation circuit only after a period of time the duration of which depends on the factor of merit attributed by the processing system of the considered vehicle to the proposed route.

12. A dispatching system according to claim 11, characterized in that it further comprises on board of each vehicle a device (P1) for neutralizing the count of said duration as long as the transceiver of another vehicle is in operation.

13. A dispatching system according to claim 12, characterized in that it further comprises a reverse counter (DR) on board of each vehicle which counter disables the transceiver of the considered vehicle if it has not replied prior to a predetermined number of other transceivers.

**Ansprüche**

1. System zur Lokalisierung eines Fahrzeugs, mit einem Primärsystem, das eine Schätzung der Position des Fahrzeugs liefert ausgehend von einer ursprünglichen Position und einem ursprünglichen Kurs sowie abhängig von den Bewegungen des Fahrzeugs seit dieser Ursprungsposition, die von bestimmten Organen des Fahrzeugs abgeleitet werden, und mit einem Sekundärsystem, das die vom Primärsystem ermittelte Schätzposition des Fahrzeugs durch Vergleich dieser geschätzten Position mit einer Beschreibung des Orts des Fahrzeugbewegungen korrigiert, dadurch gekennzeichnet, daß das Sekundärsystem die vom Primärsystem gelieferte Schätzposition des Fahrzeugs aufgrund eines Vergleichs der Schätzposition mit Zonen willkürlicher Form, verbotene Zonen genannt, korrigiert, die zu den vom Fahrzeug nicht befahrbaren Flächen gehören und eine Untergruppe dieser Flächen, was Form und Anzahl angeht, darstellen.

2. System zur Lokalisierung eines Fahrzeugs nach Anspruch 1, dadurch gekennzeichnet, daß das Primärsystem den Fahrzeugkurs aus der Differenz der Drehbewegungen eines rechten und eines linken Rades ableitet.

3. System zur Lokalisierung eines Fahrzeugs nach Anspruch 2, dessen Primärsystem zwei Scheiben mit Kreissektoren (CC), die drehmäßig mit einem rechten bzw. einem linken Rad des Fahrzeugs verbunden sind, und zwei Sonden (CG, CD) aufweist, die am Fahrzeugchassis befestigt sind und je einer der Scheiben zugeordnet sind und auf den Vorbeilauf der Sektoren auf den Scheiben reagieren, dadurch gekennzeichnet, daß das Primärsystem den Fahrzeugkurs aus der Differenz der Anzahl der vor den Sonden (CG, CD) vorbeilaufenden Sektoren (CC) der beiden Scheiben ableitet und diese Abschätzung durch die Berücksichtigung des Verhältnisses zwischen dem Zeitabstand zwischen zwei aufeinanderfolgenden, von den beiden Sonden (CG, CD) erkannten Sektorwechseln und dem Zeitabstand zwischen zwei aufeinanderfolgenden, von einer einzigen Sonde erkannten Sektorwechsel verbessert.

4. System zur Lokalisierung eines Fahrzeugs nach Anspruch 1, dadurch gekennzeichnet, daß das Sekundärsystem aufweist :

— einen Plan (PZi) mit einer nicht erschöpfenden sowie stilisierten graphischen Darstellung der verbotenen Zonen,

— eine Anzeigevorrichtung, die die geschätzte Position des Fahrzeugs bezüglich dieses Plans angeben kann,

— ein bewegliches Gestell (OP), das sich relativ zur Fläche des Plans (PZi) verschiebt,

— und einen Punktleser (PD), der von dem beweglichen Gestell getragen und von der Anzeigevorrichtung in die geschätzte Position des Fahrzeugs gebracht wird und dann erkennen kann, ob die geschätzte Position in eine verbotene Zone des Plans (PZi) fällt oder nicht.

5. System zur Lokalisierung eines Fahrzeugs nach Anspruch 1, dadurch gekennzeichnet, daß das Sekundärsystem einen Digitalspeicher, in dem Koordinaten und Informationen zur Definition der Lage und Form der verbotenen Zonen gespeichert sind, und ein Rechenorgan (OC) enthält, das bestimmt, ob die geschätzte Fahrzeugposition sich im Inneren einer der im Speicher enthaltenen verbotenen Zonen befindet oder nicht.

6. System zur Lokalisierung eines Fahrzeugs nach Anspruch 1, dadurch gekennzeichnet, daß das Sekundärsystem nicht nur die vom Primärsystem ermittelte geschätzte Position des Fahrzeugs korrigiert, sondern auch die vom Primärsystem für die Erarbeitung der Schätzposition verwendeten Zwischenwerte für die Bewegungen sowie die Kennparameter des Fahrzeugs korrigiert, die im Primärsystem für die Schätzung der Bewegungen verwendet werden.

7. System zur Lokalisierung eines Fahrzeugs nach Anspruch 1, dadurch gekennzeichnet, daß es außerdem

— einen digitalen Speicher, der die Koordinaten der Knoten eines gerichteten Graphen, der eine gewisse Anzahl von Punkten der Zone, in der sich das Fahrzeug bewegt, repräsentiert, und den Zweigen zugeordnete Gewichtungswerte enthält, die eine Schätzung der für das Durchfahren dieser Zweige benötigten Zeit liefert,

— ein Rechenorgan (OC), das die Berechnung des schnellsten Weges zwischen der vom Primärsystem geschätzten und vom Sekundärsystem nachgeführten Schätzposition des Fahrzeugs und einer als Ziel gewählten Position zu berechnen erlaubt,

— ein Mittel (PCV) zur Einführung der Zielpunktkoordinaten in das Rechenorgan (OC),

— und ein Anzeigeorgan (E) enthält, das vom Rechenorgan (OC) gesteuert wird und die in nächster Zukunft zu verfolgende Richtung sichtbar zu machen gestattet.

8. System zur Lokalisierung eines Fahrzeugs nach Anspruch 7, dadurch gekennzeichnet, daß das Anzeigeorgan (E) auf einem Teilbereich des Plans die geschätzte Position des Fahrzeugs und die empfohlene Strecke sichtbar zu machen gestattet.

9. System zur Lokalisierung eines Fahrzeugs nach Anspruch 1, dadurch gekennzeichnet, daß es außerdem einen Speicher enthält, in dem Angaben über die durchfahrene Strecke, wie z. B. die geschätzte Stellung des Fahrzeugs und die Uhrzeit nach jeweils hundert Metern akkumuliert werden.

10. System zur Lokalisierung eines Fahrzeugs nach Anspruch 1, dadurch gekennzeichnet, daß es außerdem einen funkelektrischen Antwortgeber enthält, der unter der Wirkung einer Fragevorrichtung die geschätzte Fahrzeugposition aussendet.

11. System zur Verwaltung von Kurierdiensten, die von einer Zentrale auf mehrere über Funkverbindungen mit der Zentrale verbundene Fahrzeuge verteilt werden sollen, wobei die Fahrzeuge je ein System zur Lokalisierung enthalten mit einem Primärsystem, das eine Schätzung der Position des Fahrzeugs ausgehend von einer ursprünglichen Position und den Fahrzeugbewegungen seit dieser Ursprungsposition liefert, wobei diese Fahrzeugbewegungen aus den Bewegungen gewisser Organe des Fahrzeugs abgeleitet werden, und mit einem Sekundärsystem, das die vom Primärsystem ermittelte Schätzposition des Fahrzeugs durch Vergleich dieser geschätzten Position mit den Positionen gewisser verbotener Zonen korrigiert, in denen sich das Fahrzeug unmöglich befinden kann, und wobei das Verwaltungssystem eine Fragevorrichtung in der Zentrale enthält, die es ermöglicht, jedem Fahrzeug einen Kursvorschlag mitzuteilen, und in jedem der Fahrzeuge einen Auftragsbeantworter und ein Verarbeitungssystem enthält, das einen Verdienstfaktor jedem der vorgeschlagenen Kurse abhängig von der durch das System zur Lokalisierung gelieferten Schätzposition des Fahrzeugs zuteilt, dadurch gekennzeichnet, daß das Verwaltungssystem außerdem Mittel (DT) aufweist, die den Betrieb des Beantworters eines Fahrzeugs nur in Beantwortung eines Rufs durch den Rufschaltkreis nach einer Zeitspanne zulassen, deren Dauer von dem durch das Verarbeitungssystem des betrachteten Fahrzeugs dem vorgeschlagenen Kurs zugeteilten Verdienstfaktor abhängt.

12. System zur Verwaltung nach Anspruch 11, dadurch gekennzeichnet, daß es außerdem in jedem der Fahrzeuge eine Vorrichtung (P1) enthält, mit der das Weiterlaufen der Zeitspanne neutralisiert wird, solange der Beantworter eines anderen Fahrzeugs in Betrieb ist.

13. System nach Anspruch 12, dadurch gekennzeichnet, daß es außerdem in jedem der Fahrzeuge einen Rückwärtszähler (DR) enthält, der den Beantworter des betrachteten Fahrzeugs blockiert, wenn er nicht vor einer bestimmten Anzahl anderer Beantworter geantwortet hat.

# FIG.1

# FIG.2

# FIG.3

PCV

DZI

OC

CG    CD

B1    B2

DE

CC

B1

CC    DE

# FIG.4

VF'2

VF1

VF'1

CC2

OP

M2

PD

PZI

CC1

M1    VF2

1

## FIG.5

VF'4

CC4

M4

S  PT  O  PZ

VF3  VF'3

CC3

M3

VF4

## FIG.6

E

M4

PZ  PT  O

VF'4  VF3  S  VF'3

# FIG.7

# FIG.8

# FIG.9